# EUROPEAN PATENT SPECIFICATION

(11) **EP 2 978 595 B1**
(45) Date of publication and mention of the grant of the patent: **03.05.2017**
(21) Application number: 14716940.3
(22) Date of filing: 18.03.2014
(51) Int. Cl.: B29D 30/16, B29D 30/30, B29D 30/44

(54) **PROCESS AND APPARATUS FOR OBTAINING TYRES FOR VEHICLE WHEELS**
VERFAHREN UND VORRICHTUNG ZUR HERSTELLUNG VON REIFEN FÜR FAHRZEUGRÄDER
PROCÉDÉ ET APPAREIL POUR OBTENIR DES PNEUS POUR ROUES DE VÉHICULES

(30) Priority: 27.03.2013 IT MI20130464
(43) Date of publication of application: 03.02.2016
(73) Proprietor: Pirelli Tyre S.p.A., 20126 Milano (IT)
(72) Inventor: BADOLATO, Luigi Antonio, I-20126 Milano (IT); BOSIO, Gian Luigi, I-20126 Milano (IT); PORTINARI, Gianni, I-20126 Milano (IT)
(74) Representative: Brasca, Marco
(86) International application number: PCT/IB2014/059934
(87) International publication number: WO 2014/155240

(56) References cited:
- EP-A2- 0 771 643
- EP-A2- 1 022 119
- GB-A- 1 543 523
- GB-A- 2 090 234

## Description

### Field of the art

The present invention has as object a process and an apparatus for obtaining tyres for vehicle wheels. In particular, the invention refers to an apparatus and a process capable of managing semifinished products in the form of continuous elongated elements intended to form components of the tyre in a manner so as to prevent damaging deformations thereof before the assembly and thus to ensure the quality of the produced tyres.

### State of the art

A tyre for vehicle wheels generally comprises a carcass structure comprising at least one carcass ply having respectively opposite end flaps engaged with respective annular anchoring structures, generally termed "bead cores", integrated in the zones normally identified with the name "beads", having an inner diameter substantially corresponding with a so-called "fitting diameter" of the tyre on a respective mounting rim. The tyre further comprises a belt structure comprising at least one belt layer situated in radially outer position with respect to the carcass structure and a tread band that is radially outer with respect to the belt structure. The tyre can comprise further components, such as under-liner, liner, fillers in the bead area, sidewalls, inserts of the sidewalls in the self-supporting tyres, antiabrasive inserts, underlayer, bead reinforcement layers (flippers), bead protection layers (chafer).

The building of the tyres can be carried out by means of assembly of the respective components by depositing the semifinished products on forming drums.

By "component" of the tyre it is intended any functional component of the tyre (for example under-liner, liner, carcass ply/plies, fillers in the bead zone, belt layer(s), sidewalls, inserts of the sidewalls in the self-supporting tyres, antiabrasive inserts, underlayer, tread band, bead reinforcement and protection layers, etc.) or a portion thereof.

By "semifinished product" it is intended an elongated element, made of only elastomeric material or comprising further structural elements, supplied on a forming drum for forming a component of the tyre. The semifinished product is preferably defined by a continuous elongated element shaped as a strip with a flattened section. Preferably, the further structural elements comprise one or more textile or metallic reinforcement cords. Such textile or metallic reinforcement cords are preferably arranged parallel to each other and can be tilted with respect to the longitudinal direction of the elongated element itself. Said continuous elongated element is preferably supplied in a circumferential sense on a forming drum, for example from a reel or from an extruder. Preferably said semifinished product is cut to size before being supplied on the forming drum.

With the term "elastomeric material", it is intended to indicate a material obtained by mixing at least one elastomeric polymer and at least one reinforcement filler. Preferably, such material further comprises additives such as a crosslinking agent and/or plasticizing agent. Due to the presence of the crosslinking agent, by means of heating such material can be cross-linked, so as to form the fnal manufactured product.

The document WO 2013/011396, on behalf of the same Applicant, illustrates an apparatus for building tyres for vehicle wheels wherein one forming drum at a time is loaded on a shuttle movable on a guide along a deposition line. The shuttle is moved on the guide in the two travel senses in order to successively bring it to elongated element supply stations. At each of the supply stations, one or more elongated elements are advanced on flat and tilted transport surfaces, cut to size and wound on a radially outer surface of the forming drum borne by the shuttle.

The document US 5,720,837 illustrates an apparatus for feeding a belt layer on a rotary packaging drum, The apparatus comprises a feed reel that receives the material for the belt, means for unrolling the material from the reel, means for conveying the unrolled material to the packaging drum and cutting means for cutting the material in a belt layer. The apparatus further comprises means for adjusting the shape of at least one side of the belt layer in a manner so as to make it assume a reference shape. The adjustment method provides for laterally moving a roller conveyor with respect to a successive conveyor belt during the passage of the material from one to the other. The roller conveyor further comprises guide rollers arranged on one side of the belt layer.

The document US 2010/0095820 illustrates a device for collecting, conveying and depositing a strip of elastomeric material provided with reinforcement cords. The device comprises a frame, a conveyor belt and a retention unit provided with means for retaining the strip on the conveyor belt. The retention means consist of an electromagnet or of vacuum-creation means.

The document US 7,758,714 illustrates a method for obtaining a structural element of a tyre, according to which a continuous strip-like element reinforced with cords is cut in a plurality of strips of predetermined length, The strips are successively fit on a transfer drum with the longitudinal edges partially superimposed in order to form the structural component that is then wound on a forming drum, Guide elements guide the longitudinal edges of the strip-like element in a manner such that the latter is correctly positioned on the transfer drum.

The document US 2003/0051794 illustrates a method for forming a structural element of a tyre which provides for forming a continuous strip, of cutting the continuous strip into successive strips of length equal to the section width of a tyre and subsequently joining a predefined number of said strips. The continuous strip is guided between pairs of opposite rollers.

The document EP 1 040 905 illustrates an apparatus for producing sheet elements that are wound on a packaging drum, such as belt plies and carcass plies of tyres.

The document US 6,126,780 illustrates a method and an apparatus for building a subassembly for a tyre. The method provides for forming, positioning, joining and conveying a plurality of continuous strips of elastomeric components until a laminate of components is formed, reinforced or otherwise, to be used as a subassembly for a tyre.

Document GB 1 543 523, which may be the closest prior art, discloses a roller conveyor for carrying a running length of un-tensioned tire building strip material with roller elements which rotate about axes displaced at smaller angler relative to the general direction of movement of the strip so that the strip being conveyed is urged into contact with a fixed guide. The conveyor comprises cylindrical brushes having radially extending bristles to support the strip and as well to yield axially of the brush so as to limit the force applied to urge the strip against the guide.

Document GB 2 090 234, which may be the closest prior art, discloses a centering mechanism for continuously centering a moving strip with respect to a centreline. Cut strips moving along roller track are centred relative to the track by a sensor monitoring one edge of the strips and causing displacement of the sensor and guide rollers so that the guide rollers and the sensor and consequently the edges of the strips are maintained equidistant either side of the centreline. The rollers of the roller track are skewed at about 89 DEG to the centreline. Sensor is photoelectric, infra red or ultrasonic and controls motor driving the double threaded spindle to displace the sensor and guide rollers. The strips are wound onto drum to form a radial tyre and the centrelines of different width strips are maintained central of the drum.

Document EP 0 771 643, which may be the closest prior art, discloses a process and conveyor table for continuously conveying a strip-like plastic material. A straightening device is suitable for straightening a lateral limiting edge of a strip conveyed on the conveying table. The straightening device comprising a device for changing a lateral position of cross-sectional areas of the strip relative to one another perpendicular to the conveying direction and for aligning the cross-sectional areas with one side thereof, delimiting one side of the strip. The straightening device comprises means for displacing the strip laterally relative to the conveying direction and further comprises at least one lateral abutment element providing a lateral abutment. The means for displacing preferably comprises means for deflecting the strip from and returning the strip into a conveying plane, wherein the means for deflecting and returning comprises at least one axle and conveying elements rotatably connected to the at least one axle. The at least one axle is positioned slantedly to at least one plane selected from the conveying plane and a plane perpendicular to the conveying direction.

Document EP1022119 discloses a process and apparatus for the manufacture of a belt structure for a pneumatic tyre. A continuous strip of bandage material is wound helically onto breaker layers on a drum via a controlled, powered diverting roll and a guiding system which moves axially along the drum. The rotational speeds of the drum and diverting roll are measured at each axial position of the material guide and the difference between them compared with a set value for each axial position. The variation from set values of the rotational speeds of the drum and diverting roll, winding a strip of bandage, is corrected by varying one or both speed values.

### Object of the invention

The continuous evolution of the tyres together with the need to provide different models in limited productions (in particular when high-end tyres are obtained) require the obtainment of equipment, for example building equipment, that is versatile, highly productive and at the same time capable of automatically processing the semifinished products in a repeatable and constant manner.

In the scope of production of different types and sizes of tyres, elongated semifinished products are used for the obtainment of structural components; such elongated semifinished products are of various transverse sizes and comprise elastomeric materials reinforced by means of metallic and/or polymeric wires.

In the case, for example, of the bead reinforcement layers (flipper), and of the bead protection layers (chafer) which according to needs can incorporate metallic wires and/or polymeric wires, the behaviour of the semifinished product is different and typically requires, for the transfer, dedicated apparatuses that occupy greater space and/or tend to reduce productivity.

The aforesaid needs appear altogether in contrast with each other, in particular with that observed by the Applicant relative to the quality of the tyres produced and built on the forming drum.

The quality of the product appears affected by the mode of deposition of the elongated elements on the forming drum itself, which in turn depends on the correct management of said elongated elements by the devices placed upstream of the drum, i.e. devices for supplying and cutting the elongated element and the abovementioned flat and tilted transport surfaces, like those described for example in document WO 2013/011396.

In particular, the Applicant has observed that in the known devices, the elongated elements risk being deformed (stretched, twisted, bent, crushed, etc.) during their passage into the abovementioned devices, and thus deformed they reach the terminal ends of the transport surfaces and are therefore deposited on the forming drums in an incorrect manner.

The Applicant has further observed that the abovementioned deformations negatively affect the spatial positioning of the elongated element on the transport surfaces and hence on the forming drum. In particular, the axial position of the elongated element on the forming drum risks not being perfectly correct.

The Applicant has also observed that the abovementioned problems are particularly evident in the case of elongated elements comprising metallic reinforcement wires that are tilted with respect to the longitudinal extension of the elongated element itself (used as layers of protection of the bead, termed "chafer") which, for the function thereof, are typically relatively narrow and rigid and thus difficult to guide and apply on the forming drum since they have the tendency to be twisted and/or to maintain deformations imposed for example during the obtainment and storage steps.

On the other hand, the Applicant has encountered problems with the elongated elements comprising textile reinforcement wires, since they tend to have little rigidity and be particularly deformable if they are not suitably supported and guided.

In such context, the Applicant has addressed the problem of obtaining an apparatus capable of automatically processing, in a precise, repeatable and constant manner, the elongated elements, in order to correctly deposit the same on the forming drum and build tyres of high quality, with uniform structural characteristics along their circumferential extension.

It is in particular object of the invention to guide each elongated element with precision towards the forming drum, reducing possible deformations as much as possible and seeking to replicate the design characteristics as much as possible.

The Applicant has also addressed the problem of precisely guiding elongated elements having transverse size and structural characteristics different from each other, such as elongated elements with metallic reinforcement wires and elongated elements with textile reinforcement wires intended for different components of tyres of different types and size.

### Summary of the invention

The Applicant has found that such problems can be resolved by means of an apparatus wherein only one of the two longitudinal lateral edges of the elongated element, while it is advanced along a path parallel to its longitudinal extension along a feed direction, is maintained, in one or more points of the path, against a lateral abutment guide while the other of the two edges is left free. Such movement is obtained preferably by translating, for example by means of sliding, the elongated element on top of an abutment surface that is moved tilted with respect to the feed direction and tends to deflect the elongated element towards the side where the aforesaid abutment guide is present.

More specifically, according to one aspect, the present invention relates to a method for feeding an elongated element along a feed path in a process for obtaining tyres for vehicle wheels, wherein the elongated element is longitudinally extended along said feed path, comprising:
driving and maintaining one of the two lateral longitudinal edges of the elongated element against at least one lateral abutment guide while the opposite edge remains free, in a manner so as to prevent the lateral compression of said elongated element.

Preferably, the elongated element is given a lateral thrust towards said lateral abutment guide, by acting only on an abutment surface of said elongated element.

According to a different aspect, the present invention relates to a process for obtaining tyres for vehicle wheels, comprising:
- forming components of a green tyre on a forming drum,
- shaping, moulding and vulcanising the tyre;
wherein forming at least one of the components of the green tyre comprises:
supplying an elongated element comprising an elastomeric material;
feeding the elongated element along a feed path to the forming drum, wherein the elongated element is longitudinally extended along said feed path;
depositing said elongated element on a radially outer surface of the forming drum;
wherein the feeding comprises:
   making the elongated element slide on a slip surface movable in a slip direction, delimiting with a feed direction of the elongated element a non-zero slip angle, in order to maintain one of the two lateral longitudinal edges of the elongated element against at least one lateral abutment guide.

According to a further aspect, the present invention relates to an apparatus for obtaining tyres for vehicle wheels, comprising:
at least one building line of a green tyre on a forming drum;
at least one unit for shaping, moulding and vulcanising the built green tyre;
wherein the building line comprises:
   - at least one device for supplying an elongated element comprising an elastomeric material;
   - at least one forming drum adapted to receive said elongated element on a radially outer surface;
   - at least one conveyor for making the elongated element advance towards the forming drum, wherein the supply device and the conveyor delimit a feed path;
   - at least one guide device of the elongated element operatively active along the feed path and comprising:
      - at least one lateral abutment guide; and
      - at least one slip device having a slip surface for the elongated element adapted to laterally drive and maintain the elongated element against said lateral abutment guide during the advancing of said elongated element along the feed path.

Preferably, the slip surface of the slip device is movable in a slip direction, delimiting with a feed direction of the elongated element a non-zero slip angle.

Preferably, said slip angle is equal to or greater than about 5°. Preferably said slip angle is comprised between about 5° and about 20°, more preferably between about 10° and about 15°.

The Applicant has verified that the use of one or more lateral guides arranged on only one side of the feed path and the lateral thrust/drive action distributed on the lower abutment face of the elongated element itself allow precisely conducting the elongated element without the risk of laterally compressing it and/or ruining the edges thereof, and above all without the risk of obstructing the apparatus.

The Applicant has in fact encountered that, if the elongated element is conducted between two opposite lateral guides which maintain it in the correct path, there is the risk that - above all if the width of the elongated element is not perfectly uniform along the entire longitudinal extension - there are sections of the elongated element in which the two opposite edges are forced against the two guides; in other words, there is the risk that the two guides laterally compress the elongated element, generating considerable friction on the edges so as to ruin them due to excessive rubbing and/or to slow the feed speed of that section and cause stretching or even blocking the elongated element itself between the guides.

With the present invention, the elongated element cannot be crushed between the two guides since one of the two edges is free and all of the abovementioned drawbacks are thus prevented. Indeed, as already mentioned above, the force that maintains the elongated element against the abutment guide is not a compression force but a tangential friction force that acts distributed on one or more portions of the abutment face of the elongated element.

At one or more sections of the feed path, there is a substantially transverse component of the relative velocity of the elongated element with respect to the surface on which it rests, directed towards the abutment guide(s). The contact between the elongated element and the lateral abutment guides is assured regardless of the type of reinforced elongated element, whether it contains textile or metallic reinforcement elements.

The present invention, in at least one of the aforesaid aspects, can have one or more of the preferred characteristics that are described hereinbelow.

Preferably, said slip angle is adjustable.

Preferably, in order to vary a drive force of the elongated element against the lateral abutment guide, it is provided to adjust the slip angle.

It is thus possible to adapt the slip force based, for example, on the feed speed and/or on the characteristics of the elongated element (e.g. size, weight, presence or absence of reinforcement elements and characteristics of the latter).

Preferably, the slip surface is freely movable in the slip direction, in order to be driven by the elongated element.

Preferably, the elongated element drives the slip surface in the slip direction.

In this case, the slip surface is part of a passive element, such as an idle roller or a conveyor belt wound on idle rollers, and is driven to move due to friction from the same elongated element, in turn drawn by other devices. More in detail, a component of the feed speed of the elongated element projected in the slip direction (along which the slip surface is freely movable) causes the movement of said slip surface, which in turn due to friction laterally drives the elongated element. The solution is therefore structurally simple, economical and effective.

Preferably, the slip surface comprises a plurality of stems, The stems increase the force exchanged between the elongated element and the slip surface and contribute to increasing the lateral slip force.

Preferably, each of the stems comprises a plurality of bristles.

Preferably, each bristle has a diameter of about 0.2mm.

Preferably, each stem comprises a number of bristle comprised between about 20 to about 50, e.g. 40. Preferably, each stem has a length comprised between about 3mm and about 8mm. Preferably, the stems have an average diameter comprised between about 3mm and about 6mm.

Preferably, the bristles are radially inserted in small holes and upon exiting are enlarged, reaching said average diameter. The indicated dimensions confer optimal flexibility to the stems in order to exert the correct slip action on the elongated element, which acts as if it floats on the slip surface.

Preferably, the slip device comprises a slip roller having a lateral surface, wherein the slip surface is the lateral surface of said slip roller.

Preferably, the average diameter of the roller including the stems is comprised between about 35mm and about 60mm.

The roller rotates around the main rotation axis thereof and a portion of its radially outer lateral surface placed in contact with the elongated element (substantially tangent to the elongated element) is the slip surface. Such solution is inexpensive and simple.

Preferably, the slip roller has a main rotation axis, delimiting with a direction orthogonal to a feed direction of the elongated element a non-zero tilt angle.

The slip roller is preferably a right circular cylinder and, so long as its radially outer surface in contact with the elongated element is moved, by rotating in the slip direction, the main rotation axis is tilted by a tilt angle substantially equal to the slip angle.

Preferably, the slip angle is adjusted by varying the tilt of the slip roller bearing said slip surface. For such purpose, the slip roller (in particular the spindle on which the roller rotates) is rotated around an axis perpendicular both to its main rotation axis and to the feed direction of the elongated element and locked in such position.

Preferably, the slip roller is idle. As detailed above, the elongated element drives in rotation the slip roller which in turn, due to friction, laterally drives the elongated element.

Preferably, the lateral surface of the slip roller comprises a plurality of radial stems.

Preferably, the slip roller comprises a plurality of independent, axially fit sectors.

The radially outer lateral surface of the slip roller is not a single surface but is formed by a plurality of coaxial cylindrical portions that are axially fit with each other, each belonging to a sector of the roller. For example, the roller can comprise between about 10 and about 40 sectors.

Preferably, each of the sectors freely rotates with respect to the other sectors. Each sector is idly mounted on the spindle of the roller and is not constrained to the adjacent sectors in the rotation motion around said spindle.

Preferably, the elongated element only drives sectors of the slip surface on which it rests.

In this manner, based on its width, the elongated element only moves the sectors strictly necessary, minimizing the inertia and friction of the system and the power necessary for moving the members of the apparatus and the elongated element itself. Consequently, the forces that act on the elongated element, and which tend to deform it, are also minimized.

Preferably, a lateral surface of each of the sectors comprises a plurality of radial stems.

Preferably, the lateral abutment guide comprises a fixed wall.

A relative sliding motion is preferably conferred between said lateral abutment guide and the elongated element.

Preferably, the lateral abutment guide comprises at least one slot roller. By slot roller it is generically intended a roller rotatably, preferably idly mounted around an axis perpendicular to the feed path. The radially outer surface of the slot roller is tangent to a longitudinal edge of the elongated element and the peripheral speed of its radially outer surface in the zone of contact with the elongated element is direct like the feed direction.

A relative rolling movement is therefore preferably conferred between said lateral abutment guide and the elongated element.

Preferably, the lateral guide comprises a plurality of slot rollers arranged in sequence along a section of the feed path.

Preferably, the slot rollers are mounted on low-friction bearings.

The slot rollers prevent the sliding of the edge of the elongated element against the lateral abutment guide, decreasing the risk of ruining it.

Preferably, the position of the lateral abutment guide is adjustable along a direction perpendicular to the feed direction of the elongated element.

Preferably, it is provided to adjust the position of the lateral abutment guide along a direction perpendicular to the feed direction of the elongated element.

The lateral abutment guide can be moved in the plane on which the elongated element rests, and locked in the position selected based on the width of the elongated element itself.

Preferably, the guide device comprises at least one auxiliary lateral abutment guide placed on a side opposite the feed path with respect to said at least one lateral abutment guide.

Although the elongated element is held constantly against the lateral abutment guide by the slip device, the auxiliary lateral abutment guide provides additional safety, since it prevents - in case of sudden failures of the slip device or other unexpected events - the elongated element from leaving the feed path.

Preferably, the distance between the lateral abutment guide and the auxiliary lateral abutment guide, measured along a direction perpendicular to the feed direction, is greater than the width of the continuous elongated element.

Preferably, the free opposite end of the elongated element is maintained spaced from an auxiliary lateral abutment guide placed on a side opposite the feed path with respect to said at least one lateral abutment guide.

In this manner, the auxiliary guide only carries out a safety function, but during normal operation it does not touch the elongated element and does not risk crushing it against the opposite guide.

Preferably, the auxiliary lateral abutment guide is maintained at a distance comprised between about 5mm and about 10mm from the opposite free edge of the elongated element. Such distance is sufficient for ensuring that in normal operation, the elongated element is not compressed between the two opposite guides, so as to prevent it from leaving the feed path in case of failure.

Preferably, the position of the auxiliary lateral abutment guide is adjustable along a direction perpendicular to the feed direction of the elongated element.

The auxiliary lateral abutment guide can move closer to or away from the opposite guide according to the width of the elongated element to be processed.

Preferably, the auxiliary lateral abutment guide comprises a fixed wall and/or at least one slot roller.

Preferably, the guide device is placed upstream of the conveyor.

In this manner, the spatial placement of the elongated element is conferred with precision just before the forming drum, and thus also the deposition of the elongated element on said forming drum occurs correctly. Preferably, the apparatus comprises a device for cutting the elongated element interposed between the supply device and the conveyor.

Preferably, it is provided to cut the elongated element to size before depositing it on the radially outer surface of the forming drum, wherein the elongated element is maintained against the lateral abutment guide before and/or after the cutting.

Preferably, the guide device is placed upstream of the cutting device.

Preferably, a lateral abutment guide is placed upstream and/or downstream of the cutting device.

The abutment guide/s allow/s maintaining the elongated element in a reference position, in a manner so as to execute the cut in the correct and repeatable manner.

Preferably, the guide device comprises:
a support frame;
a lateral abutment guide mounted on the support frame;
an auxiliary lateral abutment guide facing the lateral abutment guide, said lateral abutment guide and auxiliary lateral abutment guide delimiting between them a portion of the feed path having an inlet and an outlet; wherein said at least one slip device is mounted on the support frame.

The guide device is an independent element which can be mounted in the most appropriate position along the feed path.

Preferably, the slip device is positioned at the inlet.

In this manner, the elongated element is driven and maintained against the lateral abutment guide mounted on the support frame.

Preferably, the slip device is positioned at the outlet.

In this manner, the elongated element is driven and maintained against a further lateral abutment guide placed downstream of the support frame, for example at the cutting device and/or at the conveyor. Preferably, the guide device comprises at least one support roller (preferably a plurality of support rollers) idly mounted on the support frame and arranged between the inlet and the outlet.

The support roller has a rotation axis perpendicular to the feed direction and its radially outer surface rolls tangent to said feed direction. The elongated element thus rests on the support roller (or on the support rollers) which facilitates the advancing thereof; the elongated element also rests on the slip roller (or on the slip rollers) which, in addition to facilitating the advancing thereof, maintain it against the lateral guides. Preferably, the lateral abutment guide and the auxiliary lateral abutment guide each comprise a plurality of slot rollers idly mounted on the support frame.

Preferably, the support frame is curved in order to delimit a curvature of the portion of the feed path and an ideal convex abutment surface for the elongated element. The ideal convex abutment surface comprises the radially outer surface portions of the support rollers and slip rollers on which the elongated element rests.

In this manner, the traction action exerted on the elongated element also tends to crush it against the support rollers and the slip rollers, preventing it from sliding on the same but ensuring rolling.

Preferably, the supply device comprises a main reel holder for a reel of the elongated element.

Preferably, the supply comprises: unwinding the elongated element from a reel.

The previously prepared elongated element is wound on a reel ready to be processed and deposited on the forming drum.

Preferably, the apparatus comprises a separation device placed downstream of the main reel holder, said separation device being adapted to detach a support film from the elongated element.

Preferably, the apparatus comprises an auxiliary reel holder adapted to receive the support film detached from the elongated element.

Preferably, the supply comprises: separating a support film from the elongated element just unwound.

The support film serves to confer greater structural solidity to the elongated element in order to be able to manage it before it is processed; such film must be eliminated before deposition on the forming drum. Preferably, it is provided to adjust the tension of the elongated element after the separation from the support film.

After the separation from the support film, the elongated element is more pliable and risks being stretched while it is driven in the feed direction. The tension is adjusted in order to prevent such undesired stretching (which also comes to modify the section of the elongated element and the relative position of the possible reinforcement elements at its interior) and maintained at a level such to ensure that said elongated element follows the correct feed path without being disturbed/moved therefrom.

Preferably, the apparatus comprises a tightener placed between the supply device and the guide device and operatively active on the elongated element supplied by the supply device. The tightener is placed in the critical position where, just after the unwinding, the elongated element is not yet supported on supports. Preferably, the tightener comprises a lever oscillating around a pivot, with an engagement element (e.g. a transmission roller) at one end, on which the elongated element is partially wound, and possible counterweights at the opposite end. The angular position of the oscillating lever affects the length of the path of the elongated element and thus the tension thereof.

Preferably, the apparatus comprises:
a motor for driving the continuous elongated element;
a control unit operatively connected to the tightener and to said drive motor, for adjusting the action of the motor as a function of the position of said tightener.

Preferably, the adjustment of the tension is executed by means of: detecting the position of a tightener acting on the elongated element after the separation from the support film and varying a drive force of the elongated element as a function of said detected position,

Preferably, the angular position is detected of the oscillating lever (e.g. by means of a proximity sensor or an angular encoder).

Preferably, the drive motor is connected to the auxiliary reel holder in order to make it rotate.

Preferably, said drive force is indirectly exerted on the elongated element, driving the support film just detached from said elongated element.

In this manner, the traction is indirectly exerted on the elongated element and there is less risk of stretching the latter.

Preferably, the apparatus comprises:
two devices for supplying respective elongated elements comprising an elastomeric material;
two conveyors delimiting respective parallel feed paths, in order to bring the two elongated elements to said forming drum;
at least two guide devices each operatively active along the respective feed path.

Preferably, it is provided to circumferentially supply, feed and deposit in parallel two of said elongated elements on the forming drum.

Preferably, the elongated element comprises a plurality of reinforcement cords arranged parallel to each other and tilted with respect to the longitudinal extension direction of said elongated element.

Preferably the reinforcement cords are metallic.

Preferably the reinforcement cords are textile,

The two elongated elements cut to the size corresponding with the extension of the radially outer surface of the forming drum are intended, for example, to form bead reinforcement layers, termed "flippers", and/or bead protection layers, termed "chafers".

The "flipper" is a reinforcement layer that is wound around the respective bead core and bead filler in a manner so as to at least partially surround them, said reinforcement layer being arranged between the at least one carcass layer and the bead structure. Usually, the flipper is in contact with said at least one carcass layer and said bead structure.

The "chafer" faces, in axially outer position, the respective bead core and the bead filler and possibly the end flap of the carcass ply, but is not wound around the respective bead core,

The "chafer" and the "flipper" usually comprise a plurality of cords incorporated in an elastomeric material and which are generally made of textile materials (e.g. aramid or rayon) or metallic materials (e.g. steel cords). Preferably the distance between said two conveyors is adjustable.

Preferably it is provided to adjust the distance between said two elongated elements before their winding on the forming drum.

The distance between the two conveyors, for example two conveyor belts, is set based on the sizes and characteristics of the tyre to be built.

Preferably, said two parallel elongated elements are made to slide on respective slip surfaces movable in mutually diverging slip directions.

In this case, the lateral abutment guides of the two parallel feed paths are in axially outer position.

Preferably, said two parallel elongated elements are made to slide on respective slip surfaces movable in mutually converging slip directions.

In this case, the lateral abutment guides of the two parallel feed paths are in axially inner position.

### Brief description of the drawings

Further characteristics and advantages will be clearer from the detailed description of a preferred but not exclusive embodiment of a method, apparatus and process for building tyres for vehicle wheels in accordance with the present invention.

Such description will be set forth hereinbelow with reference to the set of drawings, provided only as a non-limiting example, in which:
- figure 1 shows a top schematic view of an apparatus for obtaining tyres for vehicle wheels according to the present invention;
- figure 2 shows a side elevation view of an assembly belonging to the apparatus of figure 1;
- figure 3 shows an enlarged elevation view of a device of the assembly of figure 2;
- figure 4a is a side view of the device of figure 3 from a first standpoint;
- figure 4b is a side view of the device of figure 3 from a second standpoint;
- figure 4c is an enlargement of a portion of figure 4a;
- figure 5 illustrates in detail one element of the device of figures 3, 4a, 4b and 4c;
- figure 6 is a radial half-section of a tyre for vehicle wheels obtained with the process and the apparatus of the present invention.

### Detailed description of the preferred embodiments of the invention

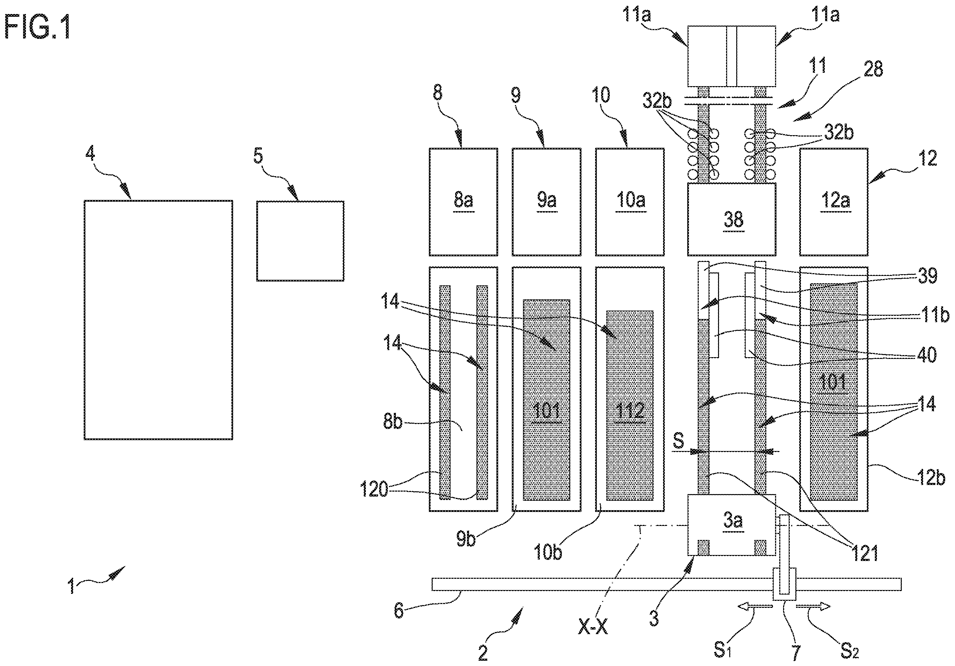

With reference to figure 1, reference number 1 overall indicates an apparatus for obtaining tyres 100 for vehicle wheels in accordance with the present invention.

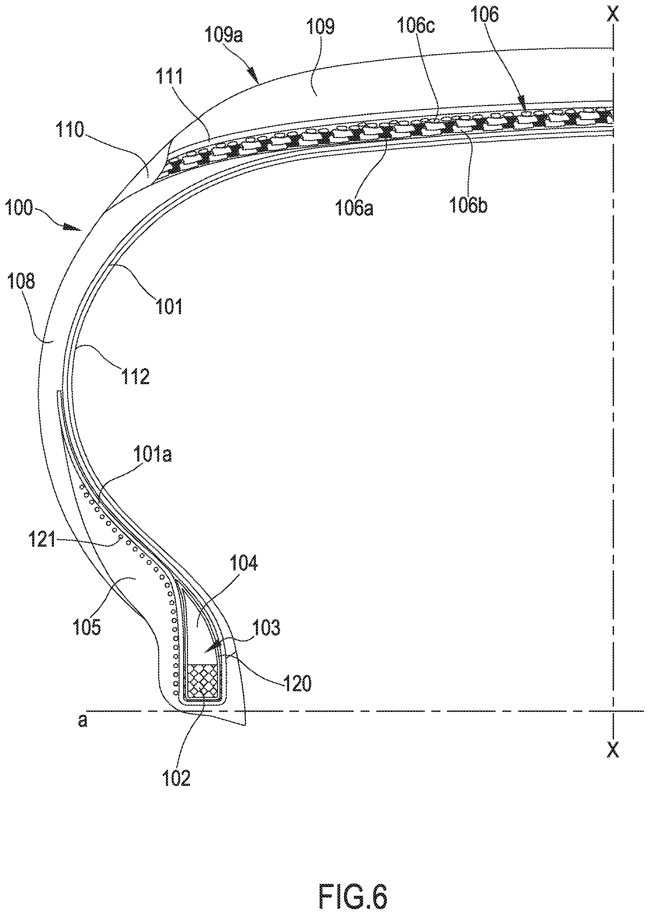

A tyre 100, obtained in said apparatus and according to the method and process in accordance with the present invention, is illustrated in figure 6 and comprises at least one carcass structure, comprising at least one carcass layer 101 having respectively opposite end flaps engaged with respective annular anchoring structures 102, termed bead cores, possibly associated with a bead filler 104. The zone of the tyre comprising the bead core 102 and the bead filler 104 forms an annular reinforcing structure 103, the bead structure, intended for anchoring the tyre on a corresponding mount rim, not illustrated.

The carcass structure is usually of radial type, i.e. the reinforcement elements of the at least one carcass layer 101 are situated on planes comprising the rotation axis of the tyre that are substantially perpendicular to the equatorial plane of the tyre. Said reinforcement elements are generally constituted by textile cords, for example rayon, nylon and polyester.

Each bead structure is associated with the carcass structure by means of backward folding of the opposite lateral edges of the at least one carcass layer 101 around the annular anchoring structure 102 in a manner so as to form the so-called flaps of the carcass 101a.

In one embodiment, the coupling between the carcass structure and the bead structure can be provided by means of a second carcass layer (not shown in Figure 6) applied in an axially outer position with respect to the first carcass layer.

An antiabrasive strip 105 made with elastomeric material is arranged in an outer position of each bead structure 103.

The carcass structure is associated with a belt structure 106 comprising one or more belt layers 106a, 106b situated in radial superimposition with respect to each other and with respect to the carcass layer, having metallic or textile reinforcement cords. Such reinforcement cords can have crossed orientation with respect to a circumferential extension direction of the tyre 100. By "circumferential" direction it is intended a direction generally directed according to the rotation direction of the tyre. In more radially outer position, the belt layers 106a,106b can have at least one zero-degree reinforcement layer 106c applied thereto, commonly known as "0° belt"; the latter generally incorporates a plurality of reinforcement cords, typically textile cords, oriented in a substantially circumferential direction - thus forming a low-degree angle (e.g. an angle between about 0° and 6°) with respect to the equatorial plane of the tyre - and covered with an elastomeric material.

In radially outer position with respect to the belt structure 106, a tread band 109 is applied that is made of elastomeric compound, like other semifinished products constituting the tyre 100. On the lateral surfaces of the carcass structure, each being extended from one of the lateral edges of the tread 109 to the respective bead structure 103, respective sidewalls 108 made of elastomeric compound are also applied in axially outer position. In radially outer position, the tread band 109 has a rolling surface 109a intended to come into contact with the ground. Circumferential grooves, which are connected by transverse notches in a manner so as to define a plurality of blocks of various form and size distributed on the rolling surface 109a, are generally obtained in this surface 109a, which for the sake of simplicity in Figure 6 is represented smooth.

An underlayer 111 may be arranged between the belt structure 106 and the tread band 109. A layer constituted by elastomeric material 110, commonly known as a "mini-sidewall", may be present at the zone of connection between the sidewalls 108 and the tread band 109; this mini-sidewall is generally obtained by means of co-extrusion with the tread band 109 and allows an improvement of the mechanical interaction between the tread band 109 and the sidewalls 108. Preferably the end portion of the sidewall 108 directly covers the lateral edge of the tread band 109.

In case of tyres without air chamber, a rubber layer 112, generally known as "liner", which provides the necessary impermeability to the inflation air of the tyre, can also be provided in a radially inner position with respect to the carcass layer 101.

The rigidity of the tyre sidewall 108 can be improved by providing the tyre bead structure 103 with a reinforcement layer 120 generally known as "flipper" or additional strip-like insert, The "flipper" 120 is a reinforcement layer that is wound around the respective annular anchoring structure 102 and the bead filler 104 in a manner so as to at least partially surround them, said reinforcement layer being arranged between the at least one carcass layer 101 and the bead structure 103. Usually, the "flipper" is in contact with said at least one carcass layer 101 and said bead structure 103. The "flipper" 120 typically comprises a plurality of metallic or textile cords (e.g. made of aramid or rayon) incorporated in an elastomeric material, The cords of the "flipper" are for example tilted about 45°.

The tyre bead structure 103 can comprise a further protection layer that is generally known with the term "chafer" 121 or protection layer and which has the function of increasing rigidity and integrity of the bead structure 103. The "chafer" 121 usually comprises a plurality of cords incorporated in an elastomeric material. The cords are generally made of textile materials (e.g. aramid or rayon) or of metallic materials (e.g. steel cords). The cords of the "chafer" have for example a tilt comprised between about 22° and about 30°.

The abovementioned components of the tyre 100 can be obtained on one or more drums by moving said drums between different stations for supplying semifinished products; at each station, suitable devices apply the aforesaid semifinished products on the drum(s).

The apparatus 1, schematically illustrated in its entirety in the enclosed figure 1, comprises a carcass building line 2; here, forming drums 3 are moved between different stations for supplying semifinished products arranged to form, on each forming drum 3, a carcass sleeve comprising the carcass plies 101, the liner 112, the annular anchoring structures 102, the "flippers" 120, the "chafers" 121 and possibly at least one part of the sidewalls 108.

Simultaneously, in an outer sleeve building line 4, one or more auxiliary drums, not illustrated, are sequentially moved between different work stations arranged to form an outer sleeve on each auxiliary drum, comprising at least the belt structure 106, the tread band 109, and possibly at least one part of the sidewalls 108.

The apparatus further comprises an assembly station 5 at which the outer sleeve is coupled to the carcass sleeve, in order to define the built green tyre 100.

The built green tyres 100 are finally transferred to at least one shaping, moulding and vulcanising unit, not illustrated.

The carcass building line 2 comprises (figure 1) a guide 6 that is preferably extended rectilinear along a deposition line. On the guide 6, a shuttle 7 is mounted that is capable of being moved by a suitable motor (not illustrated) along the guide 6 and in both travel senses "S1", "S2". The shuttle 7 is capable of supporting one forming drum 3 at a time and of making it rotate around a rotation axis "X-X" coinciding with the axis of longitudinal symmetry of the drum itself 3 and with the rotation axis of the tyre 100 being formed. In the illustrated embodiment, the drum 3 is projectingly borne by the shuttle 7, which comprises a grip element capable of retaining or releasing a terminal element of a central shaft of the forming drum 3.

Alongside the guide 6 and preferably, according to that illustrated, on only one side thereof, deposition stations 8, 9, 10,11,12 are present that are arranged consecutively side-by-side one after the other.

Each deposition station 8, 9, 10, 11, 12 comprises a device 8a, 9a, 10a, 11 a, 12a for supplying at least one elongated element 14 comprising an elastomeric material (corresponding with one of the abovementioned components of the tyre or with a pre-assembled assembly of more of said components) which is subsequently advanced on a conveyor 8b, 9b, 10b, 11b, 12b, preferably having a flat, downward-tilted transport surface. The elongated element 14 is longitudinally extended along a feed path and, preferably, at a certain point along said feed path it is cut to size according to a length corresponding with the circumferential extension of a radially outer surface 3a of said forming drum 3.

According to that illustrated in figure 1, the carcass building line 2 has a deposition station 8 for two "flippers" 120, a deposition station 9 for one carcass ply 101, a deposition station 10 for the "liner" 112, a deposition station 11 for two "chafers" 121 and a deposition station 12 for a further possible carcass ply 101.

A terminal end of each conveyor 8b, 9b, 10b, 19b, 12b is positioned close to the guide 6 in a manner such that the shuttle 7 and the drum 3 borne thereby can be arranged on top of said terminal end. The shuttle 7, being extended along the guide 6 (not necessarily according to the spatial succession of the deposition stations 8, 9, 10, 11, 12), is capable of bringing the drum 3 on top of each of the terminal ends of each conveyor 8b, 9b, 10b, 11b, 12b and to stop it in such position.

The shuttle 7 further comprises moving devices, not shown, adapted to move the grip element and the drum 3 constrained thereto vertically in two senses, along a direction orthogonal to a longitudinal extension of the guide 6. The drum 3 is therefore movable between a first position when its radially outer surface 3a is adjacent to an upper transport surface of the conveyor 8b, 9b, 10b, 11b, 12b, and a second position when such surface is removed from said transport surface. The feed direction of the elongated element is perpendicular to a plane containing the rotation axis "X-X" at the point of winding on the drum 3.

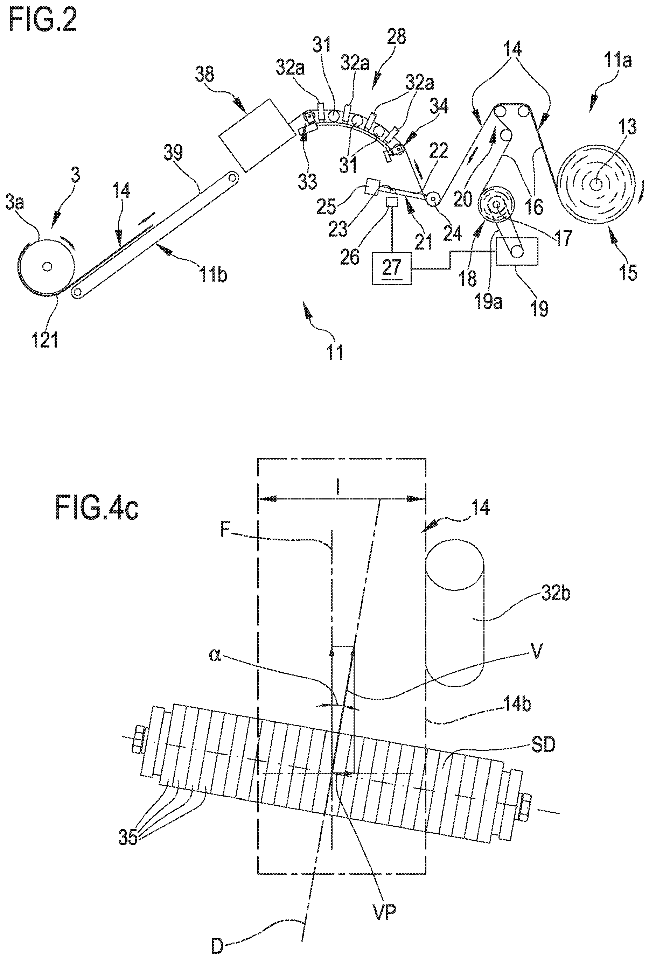

The forming drum 3 is lowered until it is abutted against the elongated element cut to size and placed in rotation until it completely winds said cut-to-size elongated element on its radially outer surface 3a while the transport surface of the conveyor 8b, 9b, 10b, 11b, 12b advances along the feed direction in a manner so as to accompany the winding. In this manner, at least some of the components of the green tyre 100 are formed. In the non-limiting illustrated embodiment, the deposition station 11 delimits two parallel feed paths, each provided with a supply device 11a and with a conveyor 11b (figure 1). One of said two feed paths is illustrated in its entirety, together with all the devices that constitute it, in the side elevation view of figure 2. Hereinbelow, reference will be made to the single feed path and to the respective devices visible in figure 2.

The supply device 11a of the deposition station 11 comprises a reel holder 13 that receives, wound in a reel 15, a continuous elongated element 14 (intended to form, once cut to size, one of the "chafers" 121) supported by a support film 16. The elongated element 14 has a flattened shape with a width "I" substantially constant along its longitudinal extension and has two opposite lateral longitudinal edges 14a, 14b.

The supply device 11a further comprises an auxiliary reel holder 17 intended to receive, in an auxiliary reel 18, the support film 16 after the latter has been detached from the continuous elongated element 14.

The auxiliary reel holder 17 is operatively connected, for example by means of a belt transmission 19a or directly to a drive motor 19.

The supply device 11a comprises a separation device 20 comprising one or more idle rollers, around each which the continuous elongated element 14 and/or the support film 16 are partially wound.

At said separation device 20, the support film 16 is separated from the continuous elongated element 14 and directed towards the auxiliary reel holder 17 while the elongated element 14 advances, free of the support film 16, towards a tightener 21.

The drive motor 19 acts directly on the auxiliary reel 18 and pulls the support film 16 which in turn drives the elongated element 14, causing the unrolling of the reel 15.

The advancing speed of the elongated element 14 along the feed path, in particular in the section between the reel 15 and the conveyor 11 b, is governed by the drive motor 19.

The tightener 21 comprises a lever 22 oscillating around a pivot 23, with a transmission roller 24 at one end, on which the elongated element 14 is partially wound, and possible counterweights 25 on the opposite end. The elongated element 14 forms a loop around the transmission roller 24 and then continues its path towards the conveyor 11b. At said loop, the elongated element 14 is not abutted against any support surface.

An angular encoder 26, or other position sensor, is operatively active on the lever 22 in order to detect the angular position thereof that depends on the position of the transmission roller 24, the position of the loop and hence the length of the feed path of the elongated element 14.

The angular encoder 26 is connected to a control unit 27 in turn connected to the drive motor 19. The control unit 27 receives a signal from the angular encoder 26 which is a function of the length of the feed path of the elongated element 14 and commands the motor 19 in order to maintain the angular position of the tightener 21 (and hence the position of the idle roller 24 and the length of the feed path of the elongated element 14) within a pre-established range. In this manner, one controls the tension to which the elongated element 14 is subjected after the separation thereof from the support film 16.

The deposition station 11 comprises a guide device 28 situated between the tightener 21 and the conveyor 11b adapted to support a section of the elongated element 14, which rolls and/or slides on top of it.

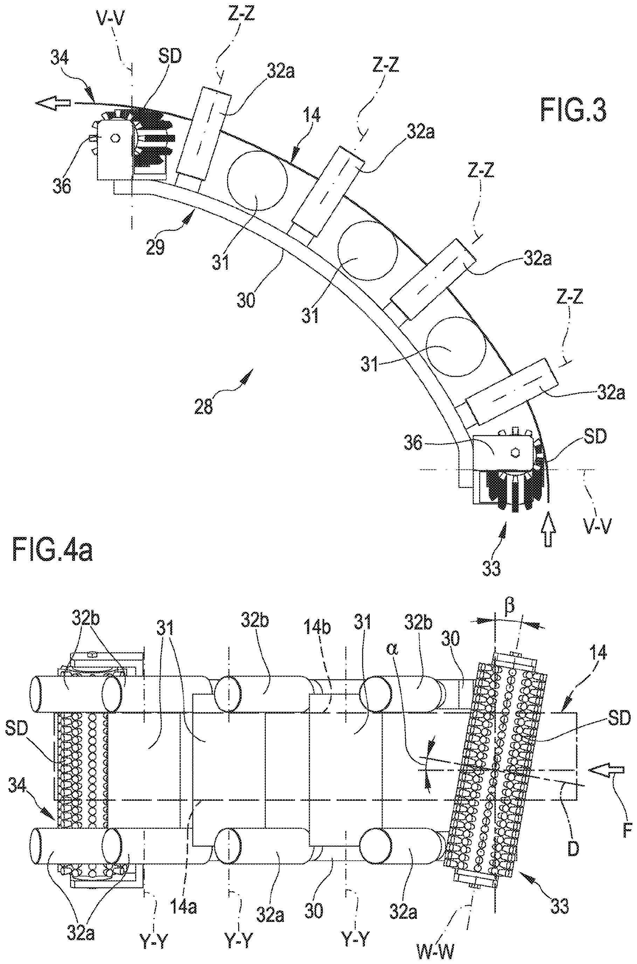

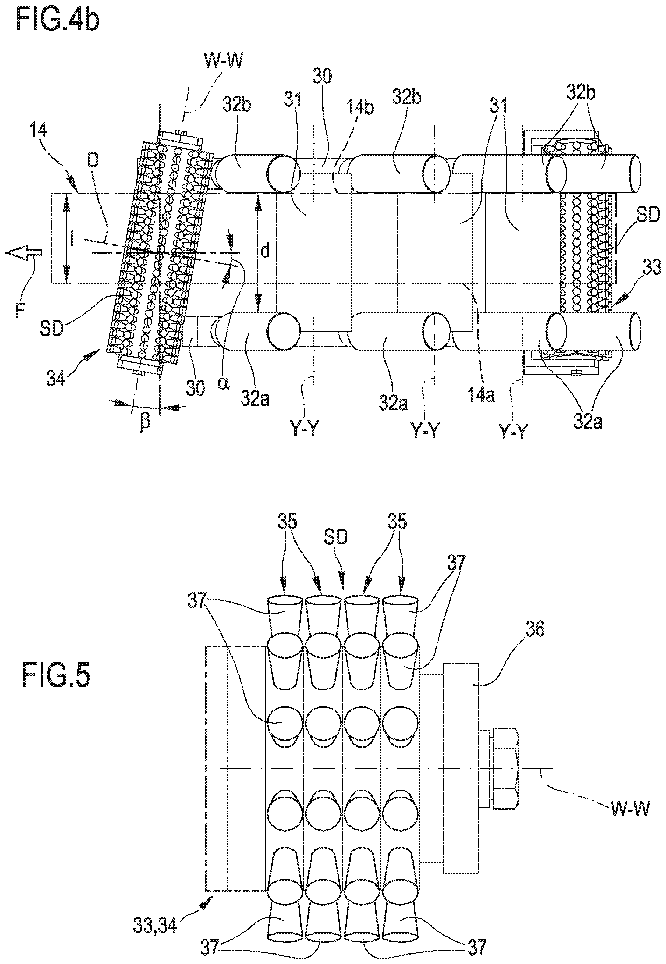

The guide device 28 comprises a support frame 29 (partially illustrated in figures 3 and 4) having two lateral longitudinal beams 30 that are parallel and curved. The two lateral beams 30 delimit a section of the feed path which is extended parallel thereto. Between the two beams 30, support rollers 31 are extended (three of these in the enclosed figures) that are idly mounted on the support frame 28 with the rotation axis "Y-Y" thereof perpendicular to the feed direction "F" of the elongated element 14. The support rollers 31 have respective portions of the radially outer surface thereof, on which the elongated element 14 rests, rolling and therefore together they identify a support surface for said elongated element 14 (which in the illustrated embodiment is substantially curved and convex).

Each of the beams 30 bears a plurality of slot rollers 32a, 32b, each of which extended perpendicular to the respective beam 30. The slot rollers 32a, 32b are idle and freely rotate around respective rotation axes "Z-Z" perpendicular to the abovementioned support surface. The slot rollers 32a, 32b are preferably parallel and in pairs (one on one beam 30 and one on the other). The slot rollers 32b of one of the beams 30 define a lateral abutment guide for the elongated element 14. The slot rollers 32a of the other beam 30 define an auxiliary lateral abutment guide for the elongated element 14. In place of the slot rollers 32a, 32b, lateral abutment guides could be present with a different structure, for example defined by fixed walls.

Each of the beams 30 can be moved with respect to the other, close to or away from each other, by making it slide on suitable guides, not shown, of the frame 28 along a direction parallel to the rotation axes "Y-Y" of the support rollers 31 (perpendicular to the feed direction "F"), in order to adjust the width corresponding to the distance "d" between the slot rollers 32a, 32b (figures 4a and 4b).

The guide device 28 comprises a slip roller 33 mounted on the support frame 29 and situated upstream of the support rollers 31, with respect to the feed direction "F" of the elongated element 14, at an inlet into the path section. The guide device 28 comprises a slip roller 34 mounted on the support frame 29 and situated downstream of the support rollers 31, with respect to the feed direction "F" of the elongated element 14, at an outlet from the path section. The two slip rollers 33, 34 have identical structure, so that only one of these will be described herein.

The slip roller 33, 34 comprises a plurality of axial sectors 35 arranged adjacent to each other but independent (figure 5). Each of the axial sectors 35 has the shape of a disc or of a cylinder with limited height with respect to its diameter. Each of the axial sectors 35 is idly mounted on a spindle, not shown, borne by a support fork 36; each axial sector 35 freely rotates on said spindle. The abovementioned axial sectors 35 freely rotate around a common rotation axis "W-W" which is the main rotation axis of the roller 33, 34. Each axial sector 35 bears, on a radially outer surface thereof, a plurality of radial stems 37 each formed by a plurality of bristles. In the non-limiting illustrated embodiment, each sector 35 has a single circumferential row of radial stems 37. Each radial stem 37 has a radial length of about 6mm and an average diameter of about 4mm. The set of radially outer surfaces of the axial sectors 35 defines a slip surface "SD" of the slip roller 33, 34. Given the particular nature of its slip surface "SD", the slip roller 33, 34 can be defined as a brush roller.

The support fork 36 is installed on the support frame 29 in a manner so that it can be rotated around an adjustment axis "V-V" (figure 3) and fixed in the desired angular position. Such adjustment axis "V-V" is perpendicular to the main rotation axis "W-W" of the slip roller 33, 34 and perpendicular to the feed direction "F",

Each of the slip rollers 33, 34 defines a slip device adapted to laterally drive and maintain the elongated element 14 against the slot rollers 32b placed on one side of the feed path, or alternatively against the slot rollers 32a placed on the other side, during the advancing of said elongated element 14 along the feed path, as will be detailed hereinbelow.

Downstream of the guide device 28, a cutting device 38 is arranged, for example *per se* known and only illustrated in a schematic manner, adapted to cut the continuous elongated element 14 coming from the guide device 28 into sections of predefined length. The cutting device 38 is capable of executing a cut from one of the lateral longitudinal edges 14a to the opposite lateral longitudinal edge 14b of the elongated element 14. The cut is executed along a line perpendicular to the feed direction "F" or along a tilted line (tilted with respect to a direction perpendicular to the feed direction "F").

In the illustrated embodiment, the elongated element 14 is of the type provided with tilted reinforcement cords and is intended to form the "chafer" 121, so that the cutting device 38 cuts the elongated element 14 along a line parallel to said cords and interposed between two of said cords.

Downstream of the cutting device 38, the abovementioned conveyor 11b is situated which is defined by a conveyor belt wound on a pair of rollers; it has an upper branch 39 for the support of the elongated element 14 cut to size which constitutes the "chafer" 121.

As specified above and as illustrated in figure 1, the deposition station 11 delimits two parallel feed paths, each provided with a supply device 11a and with a conveyor 11b. The upper branches 39 of the two conveyors 11b are parallel and have respective terminal ends placed below the forming drum 3. The distance "S" between said two conveyors 11b can be changed and adjusted based on the axial position that the "chafers" 121 must assume on the forming drum 3.

At the conveyors 11b, two lateral abutment guides 40 are present that are constituted by fixed walls placed next to the transport surfaces 39 and in axially inner positions. Further lateral abutment guides, not shown, can be positioned in axially outer position, each facing a respective axially inner guide 40. The distance between an axially inner guide 40 and an axially outer guide (placed on the sides of the same conveyor 11b) is maintained greater than the width of the elongated element 14 in a manner so as to prevent the compression, with the same logic employed for the slot rollers 32a, 32b.

In use and in accordance with the method and the process of the present invention, the elongated element 14, once separated from the support film 16, slides in abutment on the slip roller 34 placed at the inlet of the guide device 28, on the support rollers 31 and on the slip roller 33 placed at the outlet of the guide device 28.

The angular position of the support fork 36 of the slip rollers 33, 34 of each guide device 28 is adjusted (around the adjustment axis "V-V") in a manner such that the main rotation axis "W-W" of each of the slip rollers 33, 34 forms with a direction orthogonal to the feed direction "F", at that point, a non-zero tilt angle "ß". The two slip rollers 33, 34 can be tilted by equivalent or different tilt angles "ß" but preferably they are tilted on the same side, i.e. their rotation sense around the adjustment axis "V-V" is the same.

The elongated element 14, driven (upstream of the guide device 28) by the drive motor 19 and (downstream of the guide device 28) by the conveyor 11b and/or by mechanisms inside the cutting device 38, slides on the rollers 31 and on the slip rollers 33,34 and drives them in rotation.

Due to the non-zero tilt angle "ß", the lateral surface of each slip roller 33, 34 - in the zone (constituting the slip surface "SD") where the elongated element 14 rests on top of this - is movable (and driven by the elongated element 14) in a slip direction "D" tilted with respect to the feed direction "F" by a non-zero slip angle "α" (substantially equal to the tilt angle "ß") (figures 4a and 4b). The peripheral rotation speed "V" of each slip roller 33, 34, in the zone where the elongated element 14 rests on top of this, is tilted with respect to the feed direction "F" by said slip angle "α" (figure 4c). For example, said slip angle "α" is equal to or greater than about 5°, preferably said slip angle is comprised between about 5° and about 20°,

Said peripheral speed "V" therefore has a component "Vp" perpendicular to the feed direction "F" and laterally directed towards the slot rollers 32b of one of the two beams 30. The forces exchanged between the stems 35 of each slip roller 33, 34 and a lower abutment surface of the elongated element 14 that rests on said stems 35 bear and maintain the elongated element 14 against said slot rollers 32b. The drive force of the elongated element 14 against the lateral abutment guide formed by the slot rollers 32b can be adjusted by changing the slip angle "α", i.e. the tilt angle "ß" of the slip roller 33, 34.

It follows that, while the elongated element 14 advances in the feed direction "F", only one 14b of its two lateral longitudinal edges slides, rolling stably against the slot rollers 32b of a beam 30. The other 14a of the two lateral longitudinal edges remains spaced from the slot rollers 32a of the other beam 30 since the distance "d" is adjusted in a manner so as to be greater than the width "I" of the elongated element 14 (figures 4a and 4b). Preferably, the lateral longitudinal edge 14a that remains spaced from the slot rollers 32a is spaced therefrom by a distance of about 5-10mm. The lateral compression of the elongated element 14 is in such a manner prevented.

Normally, the width of the elongated element 14 is also less than the width of the slip rollers 33, 34, so that the elongated element 14 drives in rotation only the sectors 35 of the respective slip roller 33, 34 on which it rests and not those that remain free.

The two slip rollers 33, 34 can also contribute to maintaining the elongated element 14 against lateral longitudinal abutment guides, not shown, which are placed upstream and/or downstream of the guide device 28 and/or upstream and/or downstream of the cutting device 38 (like the guides 40) but on the same side as the edge 14b that slides against the slot rollers 32b. Also such lateral abutment guides can comprise slot rollers of the described type or fixed walls against which the elongated element slides.

The elongated element 14 unwound from the reel 15 is advanced, controlling the longitudinal tension thereof by means of the tightener 21 and assuring the correct lateral position thereof by means of the guide device 28.

In the illustrated embodiment, the two parallel elongated elements 14 are made to slide against lateral abutment guides (slot rollers 32b of the guide device 28 and guides 40 of the conveyors 11b) placed in axially inner position and said two parallel elongated elements 14 are made to slide on respective movable slip surfaces in mutually converging slip directions "D".

In a non-illustrated embodiment, the lateral abutment guides (slot rollers 32a of the guide device 28 and guides 40 of the conveyors 11b) are placed in axially outer position and the two parallel elongated elements 14 are made to slide on respective slip surfaces movable in mutually diverging slip directions "D".

Preferably, the elongated element 14 is intermittently advanced by steps, and after each step a section (chafer 121) of size corresponding to the circumferential extension of the radially outer surface 3a of the forming drum 3 is cut, advanced on the respective conveyor 39 and wound on the forming drum 3 itself.

## Claims

1. Process for obtaining tyres for vehicle wheels, comprising:
- forming components of a green tyre (100) on a forming drum (3),
- shaping, moulding and vulcanising the tyre (100);
wherein forming at least one of the components of the green tyre (100) comprises:
supplying an elongated element (14) comprising an elastomeric material;
feeding the elongated element (14) along a feed path to the forming drum (3), wherein the elongated element (14) is longitudinally extended along said feed path;
depositing said elongated element (14) on a radially outer surface (3a) of the forming drum (3);
wherein the feeding comprises:
making the elongated element (14) slide on a slip surface (SD) movable in a slip direction (D), delimiting with a feed direction (F) of the elongated element (14) a non-zero slip angle (α), in order to maintain one (14b) of the two lateral longitudinal edges (14a, 14b) of the elongated element (14) against at least one lateral abutment guide (32b);
wherein a lateral thrust/drive action is distributed only on a lower abutment face of the elongated element (14) and said elongated element (14) drives the slip surface (SD) in the slip direction (D).

2. Process as claimed in claim 1, comprising: adjusting the slip angle (α) in order to vary a drive force of the elongated element (14) against the lateral abutment guide (32b).

3. Process as claimed in claim 1, wherein the slip angle (α) is adjusted by varying the tilt of a slip roller (33, 34) bearing said slip surface (SD).

4. Process as claimed in claim 1, wherein the elongated element (14) only drives sectors (35) of the slip surface (SD) on which it rests.

5. Process as claimed in claim 1, comprising: adjusting the position of the lateral abutment guide (32b) along a direction perpendicular to the feed direction (F) of the elongated element (14).

6. Process as claimed in claim 1, comprising: maintaining the free opposite end (14a) of the elongated element (14) spaced from an auxiliary lateral abutment guide (32a) placed on an opposite side of the feed path with respect to said at least one lateral abutment guide (32b).

7. Apparatus for obtaining tyres for vehicle wheels, comprising:
at least one line (2) for building a green tyre (100) on a forming drum (3);
at least one unit for shaping, moulding and vulcanising the built green tyre;
wherein the building line (2) comprises:
- at least one device (11a) for supplying an elongated element (14) comprising an elastomeric material;
- at least one forming drum (3) adapted to receive said elongated element (14) on a radially outer surface (3a);
- at least one conveyor (11b) for making the elongated element (14) advance towards the forming drum (3), wherein the supply device (11a) and the conveyor (11b) delimit a feed path;
- at least one guide device (28) of the elongated element (14) operatively active along the feed path and comprising:
- at least one lateral abutment guide (32b); and
- at least one slip device (33, 34) having a slip surface (SD) for the elongated element (14) adapted to laterally drive and maintain the elongated element (14) against said lateral abutment guide (32b) during the advancing of said elongated element (14) along the feed path; wherein the slip surface (SD) is freely movable in the slip direction (D), in order to be driven by the elongated element (14) and a lateral thrust/drive action is distributed only on a lower abutment face of said elongated element (14).

8. Apparatus as claimed in claim 7, wherein the slip surface (SD) of the slip device (33, 34) is movable in a slip direction (D), delimiting with a feed direction (F) of the elongated element (14) a non-zero slip angle (α).

9. Apparatus as claimed in claim 8, wherein said slip angle (α) is adjustable.

10. Apparatus as claimed in claim 7, wherein the slip surface (SD) comprises a plurality of stems (37).

11. Apparatus as claimed in claim 7, wherein the slip device (SD) comprises a slip roller (33, 34) having a lateral surface, wherein the slip surface (SD) is the lateral surface of said slip roller (33, 34).

12. Apparatus as claimed in claim 11, wherein the slip roller (33, 34) has a main rotation axis (W-W), delimiting with a direction orthogonal to a feed direction (F) of the elongated element (14) a non-zero tilt angle (ß).

13. Apparatus as claimed in claim 11, wherein the slip roller (33, 34) is idle.

14. Apparatus as claimed in claim 11, wherein the lateral surface of the slip roller (33, 34) comprises a plurality of radial stems (37).

15. Apparatus as claimed in claim 11, wherein the slip roller (33, 34) comprises a plurality of independent, axially fit sectors (35).

16. Apparatus as claimed in claim 15, wherein each of the sectors (35) freely rotates with respect to the other sectors (35).

17. Apparatus as claimed in claim 15, wherein a lateral surface of each of the sectors (35) comprises a plurality of radial stems (37).

18. Apparatus as claimed in claim 7, wherein the position of the lateral abutment guide (32b) is adjustable along a direction perpendicular to the feed direction (F) of the elongated element (14).

19. Apparatus as claimed in claim 7, wherein the guide device (28) comprises:
a support frame (29), the lateral abutment guide (32b) being mounted on the support frame (29);
an auxiliary lateral abutment guide (32a) facing the lateral abutment guide (32b), said lateral abutment guide (32b) and auxiliary lateral abutment guide (32b) delimiting between them a portion of the feed path having an inlet and an outlet;
wherein said at least one slip device (33, 34) is mounted on the support frame (29);
wherein the support frame (29) is curved in order to delimit a curvature of the portion of the feed path and an ideal convex abutment surface for the elongated element (14).

## Patentansprüche

1. Verfahren zum Erhalt von Reifen für Fahrzeugräder, wobei das Verfahren die folgenden Schritte umfasst:
- Bilden von Komponenten eines Rohreifens (100) an einer Formungstrommel (3),
- Zurichten, Formen und Vulkanisieren des Reifens (100);
wobei das Formen zumindest einer der Komponenten des Rohreifens (100) umfasst:
Anliefern eines länglichen Elements (14) umfassend ein Elastomermaterial;
Zuführen des länglichen Elements (14) entlang eines Zuführpfads zu der Formungstrommel (3), wobei sich das längliche Element (14) der Länge nach entlang des Zuführpfads erstreckt;
Ablegen des länglichen Elements (14) an einer radial äußeren Fläche (3a) der Formungstrommel (3);
wobei das Zuführen umfasst:
Gleitenlassen des länglichen Elements (14) an einer Gleitoberfläche (SD), die in einer Gleitrichtung (D) beweglich ist, Einschließen eines Gleitwinkels (□), der nicht null ist, mit einer Zuführrichtung (F) des länglichen Elements (14), um eine (14b) der beiden Längsseitenkanten (14a, 14b) des länglichen Elements (14) gegen zumindest einen seitlichen Führungsanschlag (32b);
wobei eine seitliche Schub-/Treibwirkung nur über eine untere Anschlagfläche des länglichen Elements (14) verteilt wird, und das längliche Element (14) die Gleitoberfläche (SD) in die Gleitrichtung (D) treibt.

2. Verfahren nach Anspruch 1, umfassend die folgenden Schritte: Einstellen des Gleitwinkels (□), um eine Treibkraft des länglichen Elements (14) gegen den seitlichen Führungsanschlag (32b) zu variieren.

3. Verfahren nach Anspruch 1, wobei der Gleitwinkel (□) eingestellt wird, indem die Kippneigung einer Gleitrolle (33, 34) variiert wird, die die Gleitoberfläche (SD) trägt.

4. Verfahren nach Anspruch 1, wobei das längliche Element (14) nur jene Sektoren (35) der Gleitoberfläche (SD) treibt, auf denen es ruht.

5. Verfahren nach Anspruch 1, umfassend die folgenden Schritte: Einstellen der Position des seitlichen Führungsanschlags (32b) entlang einer Richtung senkrecht auf die Zuführrichtung (F) des länglichen Elements (14).

6. Verfahren nach Anspruch 1, umfassend die folgenden Schritte: Halten des freien gegenüberliegenden Endes (14a) des länglichen Elements (14) beabstandet von einem zusätzlichen seitlichen Führungsanschlag (32a), der an einer gegenüberliegenden Seite des Zuführpfads in Bezug auf den zumindest einen seitlichen Führungsanschlag (32b) platziert ist.

7. Vorrichtung zum Erhalt von Reifen für Fahrzeugräder, wobei die Vorrichtung umfasst:
zumindest eine Linie (2) zur Fertigung eines Rohreifens (100) an einer Formungstrommel (3);
zumindest eine Einheit zum Zurichten, Formen und Vulkanisieren des gefertigten Rohreifens;
wobei die Fertigungslinie (2) umfasst:
- zumindest eine Einrichtung (11a) zum Anliefern eines länglichen Elements (14) umfassend ein Elastomermaterial;
- zumindest eine Formungstrommel (3), die dazu geeignet ist, das längliche Element (14) an einer radial äußeren Fläche (3a) aufzunehmen;
- zumindest eine Fördereinrichtung (11b), um das längliche Element (14) zu der Formungstrommel (3) hin vorrücken zu lassen, wobei die Einrichtung zum Anliefern (11a) und die Fördereinrichtung (11b) einen Zuführpfad begrenzen;
- zumindest eine Führungseinrichtung (28) des länglichen Elements (14), die operativ entlang des Zuführpfads wirkt und Folgendes umfasst:
- zumindest einen seitlichen Führungsanschlag (32b); und
- zumindest eine Gleiteinrichtung (33, 34) mit einer Gleitoberfläche (SD) für das längliche Element (14), die dazu geeignet ist, das längliche Element (14) seitlich gegen den seitlichen Führungsanschlag (32b) zu treiben und zu halten, während das längliche Element (14) entlang des Zuführpfads vorgerückt wird; wobei die Gleitoberfläche (SD) frei in der Gleitrichtung (D) beweglich ist, um durch das längliche Element (14) getrieben zu werden, und eine seitliche Schub-/Treibwirkung nur über eine untere Anschlagfläche des länglichen Elements (14) verteilt wird.

8. Vorrichtung nach Anspruch 7, wobei die Gleitoberfläche (SD) der Gleiteinrichtung (33, 34) in einer Gleitrichtung (D) beweglich ist, die mit einer Zuführrichtung (F) des länglichen Elements (14) einen Gleitwinkel (□) begrenzt, der nicht null ist.

9. Vorrichtung nach Anspruch 8, wobei der Gleitwinkel (□) einstellbar ist.

10. Vorrichtung nach Anspruch 7, wobei die Gleitoberfläche (SD) eine Vielzahl von Stollen (37) aufweist.

11. Vorrichtung nach Anspruch 7, wobei die Gleiteinrichtung (SD) eine Gleitrolle (33, 34) mit einer seitlichen Oberfläche umfasst, wobei die Gleitoberfläche (SD) die seitliche Oberfläche der Gleitrolle (33, 34) ist.

12. Vorrichtung nach Anspruch 11, wobei die Gleitrolle (33, 34) eine Hauptdrehachse (W-W) aufweist, die mit einer Richtung senkrecht auf eine Zuführrichtung (F) des länglichen Elements (14) einen Kippwinkel (□) begrenzt, der nicht null ist.

13. Vorrichtung nach Anspruch 11, wobei die Gleitrolle (33, 34) nicht angetrieben wird.

14. Vorrichtung nach Anspruch 11, wobei die seitliche Oberfläche der Gleitrolle (33, 34) eine Vielzahl von radialen Stollen (37) aufweist.

15. Vorrichtung nach Anspruch 11, wobei die Gleitrolle (33, 34) eine Vielzahl von unabhängigen axial eingepassten Sektoren (35) aufweist.

16. Vorrichtung nach Anspruch 15, wobei jeder der Sektoren (35) sich frei relativ zu den anderen Sektoren (35) dreht.

17. Vorrichtung nach Anspruch 15, wobei eine seitliche Oberfläche eines jeden der Sektoren (35) eine Vielzahl von radialen Stollen (37) umfasst.

18. Vorrichtung nach Anspruch 7, wobei die Position des seitlichen Führungsanschlags (32b) entlang einer Richtung einstellbar ist, die senkrecht auf die Zuführrichtung (F) des länglichen Elements (14) steht.

19. Vorrichtung nach Anspruch 7, wobei die Führungseinrichtung (28) umfasst:
einen Tragrahmen (29), wobei der seitliche Führungsanschlag (32b) an dem Tragrahmen (29) montiert ist;
einen zusätzlichen seitlichen Führungsanschlag (32a), der zu dem seitlichen Führungsanschlag (32b) weist, wobei der seitliche Führungsanschlag (32b) und der zusätzliche seitliche Führungsanschlag (32a) dazwischen einen Abschnitt des Zuführpfads mit einem Einlass und einem Auslass definieren;
wobei die zumindest eine Gleiteinrichtung (33, 34) an dem Tragrahmen (29) montiert ist;
wobei der Tragrahmen (29) gekrümmt ist, um eine Krümmung des Abschnitts des Zuführpfads und eine ideale konvexe Anschlagfläche für das längliche Element (14) zu begrenzen.

## Revendications

1. Procédé d'obtention de pneus pour roues de véhicule, comprenant le fait :
- de former des composants d'un pneu cru (100) sur un tambour de formation (3),
- de façonner, mouler et vulcaniser le pneu (100) ;
dans lequel la formation d'au moins l'un des composants du pneu cru (100) comprend le fait :
de fournir un élément allongé (14) comprenant un matériau élastomère ;
d'acheminer l'élément allongé (14) le long d'un trajet d'acheminement vers le tambour de formation (3), où l'élément allongé (14) s'étend longitudinalement le long dudit trajet d'acheminement ;
de déposer ledit élément allongé (14) sur une surface radialement externe (3a) du tambour de formation (3) ;
dans lequel l'acheminement comprend le fait :
d'amener l'élément allongé (14) à glisser sur une surface de glissement (SD) mobile dans une direction de glissement (D), délimitant avec une direction d'acheminement (F) de l'élément allongé (14) un angle de glissement non nul (α), afin de maintenir l'un (14b) des deux bords longitudinaux latéraux (14a, 14b) de l'élément allongé (14) contre au moins un guide de butée latéral (32b) ;
dans lequel une action de poussée/entraînement latéral (e) est répartie uniquement sur une face de butée inférieure de l'élément allongé (14) et ledit élément allongé (14) entraîne la surface de glissement (SD) dans la direction de glissement (D).

2. Procédé tel que revendiqué dans la revendication 1, comprenant le fait : de régler l'angle de glissement (α) afin de faire varier une force d'entraînement de l'élément allongé (14) contre le guide de butée latéral (32b).

3. Procédé tel que revendiqué dans la revendication 1, dans lequel l'angle de glissement (α) est réglé en faisant varier l'inclinaison d'un rouleau de glissement (33, 34) portant ladite surface de glissement (SD).

4. Procédé tel que revendiqué dans la revendication 1, dans lequel l'élément allongé (14) entraîne uniquement des secteurs (35) de la surface de glissement (SD) sur laquelle il repose.

5. Procédé tel que revendiqué dans la revendication 1, comprenant le fait : de régler la position du guide de butée latéral (32b) le long d'une direction perpendiculaire à la direction d'acheminement (F) de l'élément allongé (14).

6. Procédé tel que revendiqué dans la revendication 1, comprenant le fait : de maintenir l'extrémité libre opposée (14a) de l'élément allongé (14) espacée d'un guide de butée latéral auxiliaire (32a) placé sur un côté opposé du trajet d'acheminement par rapport audit au moins un guide de butée latéral (32b).

7. Appareil d'obtention de pneus pour roues de véhicule, comprenant :
au moins une chaîne (2) pour construire un pneu cru (100) sur un tambour de formation (3) ;
au moins une unité pour façonner, mouler et vulcaniser le pneu cru construit ;
dans lequel la chaîne de construction (2) comprend :
- au moins un dispositif (11a) pour fournir un élément allongé (14) comprenant un matériau élastomère ;
- au moins un tambour de formation (3) adapté pour recevoir ledit élément allongé (14) sur une surface radialement externe (3a) ;
- au moins un transporteur (11b) pour faire avancer l'élément allongé (14) vers le tambour de formation (3), où le dispositif de fourniture (11a) et le transporteur (11b) délimitent un trajet d'acheminement ;
- au moins un dispositif de guidage (28) de l'élément allongé (14) actif de manière fonctionnelle le long du trajet d'acheminement et comprenant :
- au moins un guide de butée latéral (32b) ; et
- au moins un dispositif de glissement (33, 34) ayant une surface de glissement (SD) pour l'élément allongé (14) adaptée pour entraîner et maintenir latéralement l'élément allongé (14) contre ledit guide de butée latéral (32b) pendant l'avancement dudit élément allongé (14) le long du trajet d'acheminement ; où la surface de glissement (SD) peut se déplacer librement dans la direction de glissement (D), afin d'être entraînée par l'élément allongé (14) et une action de poussée/entraînement latéral(e) n'est répartie que sur une face de butée inférieure dudit élément allongé (14).

8. Appareil tel que revendiqué dans la revendication 7, dans lequel la surface de glissement (SD) du dispositif de glissement (33, 34) est mobile dans une direction de glissement (D), délimitant avec une direction d'acheminement (F) de l'élément allongé (14) un angle de glissement non nul (α).

9. Appareil tel que revendiqué dans la revendication 8, dans lequel ledit angle de glissement (α) peut être réglé.

10. Appareil tel que revendiqué dans la revendication 7, dans lequel la surface de glissement (SD) comprend une pluralité de tiges (37).

11. Appareil tel que revendiqué dans la revendication 7, dans lequel le dispositif de glissement (SD) comprend un rouleau de glissement (33, 34) ayant une surface latérale, où la surface de glissement (SD) est la surface latérale dudit rouleau de glissement (33, 34).

12. Appareil tel que revendiqué dans la revendication 11, dans lequel le rouleau de glissement (33, 34) présente un axe de rotation principal (W-W), délimitant avec une direction orthogonale à une direction d'acheminement (F) de l'élément allongé (14) un angle d'inclinaison non nul (β).

13. Appareil tel que revendiqué dans la revendication 11, dans lequel le rouleau de glissement (33, 34) est un galet libre.

14. Appareil tel que revendiqué dans la revendication 11, dans lequel la surface latérale du rouleau de glissement (33, 34) comprend une pluralité de tiges radiales (37).

15. Appareil tel que revendiqué dans la revendication 11, dans lequel le rouleau de glissement (33, 34) comprend une pluralité de secteurs indépendants, s'accouplant axialement (35).

16. Appareil tel que revendiqué dans la revendication 15, dans lequel chacun des secteurs (35) tourne librement par rapport aux autres secteurs (35).

17. Appareil tel que revendiqué dans la revendication 15, dans lequel une surface latérale de chacun des secteurs (35) comprend une pluralité de tiges radiales (37).

18. Appareil tel que revendiqué dans la revendication 7, dans lequel la position du guide de butée latéral (32b) peut être réglée le long d'une direction perpendiculaire à la direction d'acheminement (F) de l'élément allongé (14).

19. Appareil tel que revendiqué dans la revendication 7, dans lequel le dispositif de guidage (28) comprend :
un cadre de support (29), le guide de butée latéral (32b) étant monté sur le cadre de support (29) ;
un guide de butée latéral auxiliaire (32a) faisant face au guide de butée latéral (32b), ledit guide de butée latéral (32b) et ledit guide de butée latéral auxiliaire (32b) délimitant entre eux une partie du trajet d'acheminement ayant une entrée et une sortie ;
dans lequel ledit au moins un dispositif de glissement (33, 34) est monté sur le cadre de support (29) ;
dans lequel le cadre de support (29) est incurvé afin de délimiter une courbure de la partie du trajet d'acheminement et une surface de butée convexe idéale pour l'élément allongé (14).
